Europäisches Patentamt

(19) European Patent Office

Office européen des brevets

(11) Publication number: **0 146 655**
**B1**

# (12) EUROPEAN PATENT SPECIFICATION

(45) Date of publication of patent specification: **02.08.89**

(21) Application number: **83201778.4**

(22) Date of filing: **14.12.83**

(51) Int. Cl.⁴: **B 01 D 13/04, B 01 D 13/00**

(54) **A process for separating mixtures of water and an organic compoundand a water-selective permeation membrane.**

(43) Date of publication of application:
**03.07.85 Bulletin 85/27**

(45) Publication of the grant of the patent:
**02.08.89 Bulletin 89/31**

(84) Designated Contracting States:
**AT BE CH DE FR IT LI NL SE**

(56) References cited:
**EP-A-0 062 494
FR-A-1 578 813
GB-A- 568 726
GB-A-1 351 188
US-A-3 367 787
US-A-4 067 805**

**PATENTS ABSTRACTS OF JAPAN, vol. 3, no.
63 (C-47), May 30, 1979, page 24 C 47; & JP - A -
54 36388 (SUMITOMO DENKI KOGYO K.K.)
17-03-1979**

**CHEMICAL ABSTRACTS, vol. 82, no. 6,
February 10, 1975, page 24, no. 31811n,
Columbus, Ohio, US; M. RINAUDO et al.:
"Preparation of a polysaccharide cation
exchange membrane. Hyperfiltration" & C. R.**

(73) Proprietor: **THE DOW CHEMICAL COMPANY
2030 Dow Center Abbott Road P.O. Box 1967
Midland Michigan 48640-1967 (US)**

(72) Inventor: **Reineke, Charles Everett
2900 Valorie Lane
Midland Michigan 48640 (US)**
Inventor: **Jagodzinski, James Anthony
1801 Brookfield Drive
Midland Michigan 48640 (US)**

(74) Representative: **Smulders, Theodorus A.H.J., lr.
et al
Vereenigde Octrooibureaux Nieuwe Parklaan
107
NL-2587 BP 's-Gravenhage (NL)**

(56) References cited:

**HEBD. SEANCES ACAD. SCI., SER. C 1974,
279(6), 253-6
Kirk-Othmer, Encyclopedia of Chem. Techn.,
3.ed., vol. 12, (1980), pp. 55-56
Kirk-Othmer, Encyclopedia of Chem. Techn.,
3.ed., vol. 12, (1980), pp. 55-56**

Courier Press, Leamington Spa, England.

# EP 0 146 655 B1

**Description**

This invention relates to a process for separating mixtures of water and an organic compound comprising

(a) contacting one side of a membrane with a fluid feed mixture containing water and an organic compound, and

(b) withdrawing from the other side of said membrane a permeate in vapor form, said permeate containing a higher concentrate of water than said feed mixture,

and to a water-selective permeation membrane comprising an essentially continuous anionic polysaccharide composition.

The effective removal of water from organic fluids is important in pollution control and in numerous industries such as in distilleries. While such separations are comparatively simple when the organic compound is immiscible with water, many organic compounds are partially or completely soluble in water. Separation of such organic compounds from water is sometimes carried out by distilling the mixture but this process requires large amounts of energy. Moreover, some organic liquids which have boiling points close to that of water or which form azeotropic mixtures with water cannot be readily separated using a distillation process.

It has been found that certain materials, when formed into thin membranes, possess the capacity to selectively permit water to pass therethrough while preventing the passage of organic compounds. Thus, Binning et al in U.S. Patent Nos. 2,953,502 and 3,035,060 teach the separation of ethanol from water using cellulose acetate and hydrolyzed polyvinyl acetate membranes. Chiang et al. in U.S. Patent Nos. 3,750,735; 3,950,247; 4,035,291 and 4,067,805 describe the separation of formaldehyde from water employing a variety of membranes. Thyssen et al in U.S. Patent No. 3,367,787 teach a process for the concentration of an aqueous liquid, in which a water-insoluble carboxymethyl cellulose layer in the acid form can be used to separate water from a mixture containing water and organic compounds.

Unfortunately, previously known separation membranes do not exhibit a selectivity as high as desired for many applications; that is, the water which permeates therethrough contains substantial amounts of organic compounds. Thus, it would be desirable to develop a separation membrane which more efficiently separates water from organic compounds.

The present invention particularly resides in a process for separating mixtures of water and an organic compound comprising

(a) contacting one side of a membrane with a fluid feed mixture containing water and an organic compound, and

(b) withdrawing from the other side of said membrane a permeate in vapor form, said permeate containing a higher concentrate of water than said feed mixture,

characterized by using a water-selective permeation membrane comprising an essentially continuous anionic polysaccharide composition wherein said polysaccharide is selected from the group consisting of an alkali metal carboxyalkyl cellulose, an alkali metal cellulose sulfate, and ether derivatives thereof, wherein said anionic polysaccharide contains a plurality of pendant anionic groups in salt form and said anionic groups are present in an amount sufficient to allow the membrane to permeate water while substantially impeding permeation of organic compounds therethrough.

In another aspect, this invention is a process wherein the membrane further comprises a polymer which is not a polysaccharide which polymer has a plurality of anionic groups in salt form, said polymer being present in an amount sufficient to increase the charge density in said membrane.

Another aspect of this invention is a water-selective permeation membrane comprising an essentially continuous anionic polysaccharide composition, characterized in that said polysaccharide is selected from the group consisting of potassium carboxyalkyl cellulose, cesium carboxyalkyl cellulose, an alkali metal cellulose sulfate, and ether derivatives thereof, wherein said anionic polysaccharide contains a plurality of pendant anionic groups in salt form and said anionic groups are present in an amount sufficient to allow the membrane to permeate water while substantially impeding permeation of organic compounds therethrough.

In another aspect, this invention is a permeation membrane further comprising a polymer which is not a polysaccharide which polymer has a plurality of anionic groups in salt form, said polymer being present in an amount sufficient to increase the charge density in said membrane. The membranes of this invention exhibit surprisingly good selectivity for water, i.e., when contacted on one side with a fluid mixture of an organic compound and water, they allow water to permeate therethrough while substantially preventing the permeation of the organic materials therethrough.

According to the method, surprisingly efficient separations of water and organic compounds can be effected, with the permeate containing a higher concentration of water than permeates obtained using conventional separation membranes.

It is observed that Rinaudo et al, Chem. Abstr. 82 (1975) no. 31811n disclose a hydrophilic polysaccharide cation exchange membrane for hyperfiltration, which comprises crosslinked carboxymethylcellulose in sodium form. The membrane is prepared by casting a film of sodium carboxymethylcellulose on a glass plate and crosslinking the dried film with a solution of acetone, formaldehyde and hydrochloric acid. Nothing in this reference, however, suggests that such films,

2

although referred to as membranes, would have any utility in pervaporation and would have particularly high selectivity in separation of water from organic compounds. It is believed that the manner of crosslinking taught would adversely effect the water permeability of the film. More importantly, this reference certainly does not disclose or suggest any potassium or cesium carboxymethylcellulose membranes, which have been found to exhibit far superior permeation rates and separation factors in comparison to the sodium form of the membrane.

The amount of anionic substitution on a cellulose molecule is expressed as the average number of anionic groups per anhydroglucose unit of the molecule (degree of substitution (DS)). Since there are three hydroxyl groups per anhydroglucose unit of a cellulose molecule, the DS can range from 0 to 3. For the purpose of this invention, the anionic degree of substitution must be sufficiently high that the materials prepared therefrom will allow water to permeate therethrough while substantially impeding the permeation of organic compounds. Advantageously, the DS is in the range from 0.1 to 3.0, preferably from 0.3 to 1.5. In addition to the anionic substituent, the cellulose derivative can also contain other substitution, i.e., methyl, ethyl, hydroxyalkyl and the like in an amount such that said substitution does not substantially increase the permeability of the cellulose to organic compounds.

It has been found that the selectivity and the permeation rate, i.e. the rate at which water permeates the membrane, are dependent on the choice of the alkali metal. The selectivity of the membrane generally decreases slightly as the counterion is changed from sodium to potassium to cesium while the permeation rate increases as the counterion is varied in the same sequence. However, the selectivities of the membranes of the invention are superior to those of conventional separation membranes even when cesium is employed as the counterion.

The anionic polysaccharide or polysaccharide derivative is advantageously converted to salt form by contacting said derivative with a dilute solution of the hydroxide of the desired counterion. Generally, the salt can be formed in this manner at ambient conditions using relatively dilute, i.e., 0.02 to 1 molar solutions of the desired hydroxide. When the cationic species form an insoluble hydroxide, a solution of a soluble salt of said cation is contacted with the anionic polysaccharide in order to convert said anionic polysaccharide to the desired salt form through an ion exchange process.

In a preferred embodiment of this invention, the anionic polysaccharide or polysaccharide derivative is blended with a salt of a polyanion which is not a polysaccharide having a plurality of groups derived from strong or weak acids such as are described hereinbefore. In general, the polyanion is chosen such that it forms solutions which are sufficiently compatible with solutions of the anionic polysaccharide or polysaccharide derivative such that blends can be produced therefrom. The polyanion is employed in the salt form, with the counterions being those described hereinbefore. The polyanion can be a homopolymer containing repeating anionic units such as polyacrylic acid or poly(sodium vinylsulfonate), or may be a copolymer having repeating anionic units and repeating nonionic units such as a styrene/sodium vinylsulfonate copolymer or sodium acrylate/alkyl acrylate copolymers. The polyanion has a molecular weight sufficiently high that films prepared therefrom do not rapidly dissolve or become distorted in the presence of the water/organic mixture to be contacted therewith. Preferably, the polyanion is a homopolymer of an ethylenically unsaturated sulfonate or carboxylate with sodium polyacrylate, sodium poly(vinyl sulfonate) and sodium poly(styrene sulfonate) being preferred.

The polyanion is employed in amounts sufficient to increase the charge density on the membrane but in amounts less than that which causes substantial incompatibility with the anionic polysaccharide derivative in the preparation of the membrane. Generally, such substantial incompatibility is evidenced by the separation of a solution containing these components into distinct phases. Said phase separation makes it difficult to prepare a film which is a blend of the polyanion and the polysaccharide. In general, the polyanion will comprise up to about 70 weight percent preferably less than 50 weight percent, more preferably less than 30 weight percent of the membrane.

The membranes of this invention are advantageously formed into the desired shape by casting films of the membrane onto a suitable surface and removing the solvent therefrom. Said films may be, for example, flat, concave, convex, or in the form of hollow fibers. Preferably, the membrane is cast from an aqueous solution. The solvent is generally removed by evaporation at ambient conditions or at elevated temperatures, low pressures, or by other suitable techniques. Membranes which are blends of an anionic polysaccharide or polysaccharide derivative and a polyanion are generally formed in the manner described hereinbefore by casting a film from the solution containing both materials. Solutions containing both the anionic polysaccharide derivative and the polyanion are advantageously prepared by mixing solutions of the anionic polysaccharide derivative with a solution of the polyanion or by mixing finely divided portions of each material and dissolving the mixture into a suitable solvent.

The anionic polysaccharide derivative and the polyanion described hereinbefore are generally soluble in water and the use thereof is generally restricted to feed mixtures having relatively low concentrations of water, i.e., less than 50 weight percent water. Accordingly, it is highly preferred to crosslink the membranes in order to render them insoluble in water. Cross-linking of polysaccharides is known in the art and can be accomplished, for example, by reacting said polysaccharide with glyoxal or epihalohydrin ammonium hydroxide. When a blend of a polysaccharide and a polyanion is employed, crosslinks may be formed between the polysaccharide and the polyanion, solely between the polysaccharide, or solely between the polyanion.

3

The crosslinking agent is employed in an amount sufficient to render the membrane essentially insoluble in water. The crosslinking agent advantageously comprises from 1 to 30 weight percent of the membrane. The crosslinked membranes of this invention can be effectively employed using feed compositions containing even very high, i.e., 90 weight percent or more, concentrations of water.

In the preparation of crosslinked membranes, the crosslinking agent is advantageously added to a solution of the polysaccharide, and the membrane formed into the desired shape. The membrane is cured after the removal of the solvent therefrom to crosslink the membrane. The particular means employed for curing the membrane will depend on a variety of factors including the particular polymers and crosslinkers employed. Generally, known procedures for curing crosslinked polymers, such as heating, irradiation and the like, are advantageously employed to crosslink the membranes of the invention.

The membrane has a minimum thickness such that it is essentially continuous, i.e., there are essentially no pinholes or other leakage passages therein. However, the rate at which water permeates the membranes of this invention is inversely proportional to the thickness of the membrane. Accordingly, it is preferred to prepare a membrane as thin as possible in order to maximize the permeation rate while ensuring the integrity of the membrane. The thickness of the membrane is advantageously in the range from about 0.1 to 250 µm, preferably from about 10 to about 50 µm. Mechanical strength can be imparted to the membrane by affixing the membrane to a porous supporting material. Particularly thin membranes can be formed by casting the membrane directly onto the porous supporting material.

Separation of water from organic compounds is effected with the membranes of this invention using general procedures described in U.S. Patent Nos. 3,950,247 and 4,035,291 to Chiang et al. In general, the separation process comprises contacting one side of the membranes of this invention with the fluid mixture containing an organic compound and water and withdrawing from the other side of the membrane a mixture containing a substantially higher concentration of water. The feed mixture can be a mixture of gaseous and liquid components. The permeate side of the membrane is maintained at a pressure less than the vapor pressure of water and is advantageously as low as about 0.1 mm of mercury (13 Pa). Superatmospheric pressure may also be exerted on the feed side of the membrane. The temperature at which the separations are conducted affects both the selectivity and the permeation rate. As the temperature increases, the permeation rate rapidly increases, while selectivity decreases slightly. The increase in rate, however, may be compensated for by the increase in energy needed to maintain the system at an elevated temperature. In general, the temperature is sufficiently high that the water has a substantial vapor pressure at the pressures at which the separation is effected, and is sufficiently low that the membrane remains stable. Advantageously, the temperature is from −10°C to 95°C.

The membranes of this invention are most useful in separating water from organic compounds which are miscible with water. Exemplary water-miscible compounds include, but are not limited to, aliphatic alcohols such as methanol, ethanol, propanol, hexanol and the like; ketones such as ethyl methyl ketone, acetone, diethyl ketone and the like; aldehydes such as formaldehyde, acetaldehyde and the like; alkyl esters of organic acids such as ethyl acetate, methylpropionate and the like; p-dioxane, alkyl and cycloalkyl amines and other water-miscible organic compounds which do not chemically react with or dissolve the membranes of this invention. In addition, the organic compound may be one in which water has a limited solubility, such as the chlorinated alkanes like chloroform and carbon tetrachloride. Preferably, the organic compound is an aliphatic alcohol, a ketone, or an aldehyde, with lower alcohols, especially ethanol, being preferred.

The ability of a membrane to selectively permeate one component of a multi-component mixture is expressed as the separation factor α which is defined as

$$\alpha_{A/B} = \frac{wt\ \%\ A/wt\ \%\ B\ in\ permeate}{wt\ \%\ A/wt\ \%\ B\ in\ feed}$$

wherein A and B represent the components to be separated. For the purposes of this invention, A will represent water.

The separation factor α is dependent on the type and concentrations of the components in the feed mixture as well as the relative concentrations thereof in the feed. Accordingly, it is also advantageous to express the efficiency of the separation membrane in terms of the composition of the permeate. The separation membranes of this invention will generally have separation factors for water/ethanol mixtures of at least 50, preferably at least 100, more preferably at least 500 and often will have separation factors of 2500 or more. The permeates obtained with the use of the separation membranes of this invention to separate ethanol/water mixtures will generally contain at least 90 weight percent, preferably at least 98 weight percent, more preferably at least 99.5 weight percent water.

The separation membranes of this invention are especially useful in the preparation of anhydrous organic compounds, particularly when said compound forms an azeotropic mixture with water. In such systems, the membranes of this invention present an economical alternative to azeotropic distillation. The membranes of this invention can also be used in conjunction with distillation processes to effect rapid, efficient removal of water from organic compounds.

4

The following examples are intended to illustrate the invention but not to limit the scope thereof. All parts and percentages are by weight unless otherwise indicated.

Example 1

Membrane Sample No. 1 is prepared from an aqueous solution containing 4.25 percent sodium carboxymethylcellulose. The carboxymethylcellulose has a carboxymethyl degree of substitution of about 0.9. The membranes are prepared by casting an excess of the solution onto a glass plate and allowing the water to evaporate, thereby yielding a film having a thickness of about 19.8 μm (0.78-mil).

The following apparatus is used to evaluate membrane Sample No. 1 and the samples in all subsequent examples. The membrane is placed into a Gelman in-line stainless steel filter holder which is modified so that a 14.19 cm$^2$ section of the membrane is open to the feed solution. The membrane is supported with cellulosic filter paper and a porous metal disk. The permeate side of the filter holder is connected to a vacuum pump with two cold traps placed in line to collect the permeate by condensation. The membrane and holder are then immersed in a closed flask containing the mixture to be separated. The flask is equipped with a thermocouple or thermometer for measuring temperature and a reflux condenser to prevent feed loss due to evaporation.

Separation is effected by pulling a vacuum of about 0.1 mm/Hg (13 Pa) on the permeate side of the membrane and collecting the permeate in the cold traps. The temperature of the feed solution is as indicated in the individual examples. The permeation rate is calculated by periodically weighing the collected permeate. The permeate composition is determined by gas chromatography analysis using a Hewlett Packard 5840A gas chromatograph equipped with a thermal conductivity detector. The column is a 1.83 m×0.32 cm (6 ft×1/8 inch inside diameter) in Poropak QS column.

Sample No. 1 is evaluated according to the foregoing procedure using various ethanol/water mixtures as the feed composition. Each separation is effected at 25°C until a steady state condition is obtained, i.e., until the permeation rate and permeate content are nearly constant over time. Once a steady state is reached, the content of the permeate and permeation rate are determined. The respective concentrations of water in the feeds, concentrations of water in the permeates, separation factors and permeation rates are as reported in Table I following.

TABLE I

| % H$_2$O in feed | % H$_2$O in permeate | Separation factor | Permeation rate (g-mil/m$^2$-h) | (g-mm/m$^2$-h) |
|---|---|---|---|---|
| 5.68 | 99.36 | 2578 | 12.2 | 0.31 |
| 9.93 | 99.25 | 1200 | 37.8 | 0.96 |
| 18.19 | 99.49 | 877 | 126.5 | 3.21 |
| 20.10 | 99.62 | 1042 | 128 | 3.25 |

It is seen from the foregoing Table I that the separation membranes made from sodium carboxymethylcellulose exhibit excellent selectivity for water/ethanol mixtures as expressed in terms of the separation factor or as expressed as the composition of the permeate.

Example 2

A 4.25 percent solids solution containing 77 weight percent of the sodium carboxymethylcellulose having a degree of substitution of 0.85 and 23 weight percent sodium polyacrylate (based on the total solids weight) is prepared by mixing separate solutions of the sodium carboxymethylcellulose and the sodium polyacrylate. Membrane Sample No. 2 with an area of 14.19 cm$^2$ and a thickness of 15.2 μm (0.6 mil) is prepared as described in Example 1. This membrane is used to separate several ethanol/water mixtures at 25°C with the results given in Table II following.

TABLE II

| % H$_2$O in feed | % H$_2$O in permeate | Separation factor | Permeation rate (g-mil/m$^2$-h) | (g-mm/m$^2$-h) |
|---|---|---|---|---|
| 4.4 | 99.6 | 3200 | 7.2 | 0.18 |
| 16.1 | 99.8 | 2600 | 103 | 2.62 |
| 19.7 | 99.7 | 1355 | 161 | 4.09 |
| 24.1 | 99.3 | 447 | 308 | 7.82 |

At all feed compositions, the permeate is essentially free of ethanol when a sodium carboxymethylcellulose/sodium polyacrylate membrane is employed to separate ethanol and water mixtures.

Example 3

Membrane Sample No. 3 comprising 78.5 percent sodium carboxymethylcellulose having a degree of substitution of 0.9 and 21.5 weight percent polysodiumvinyl sulfonate is prepared according to the methods described in Example 1. The membrane is 12.7 µm (0.5 mil) thick and is evaluated with various ethanol/water mixtures at 25°C with the results as given in Table III following.

### TABLE III

| % $H_2O$ in feed | % $H_2O$ in permeate | Separation factor | Permeation rate | |
|---|---|---|---|---|
| | | | (g-mil/m²-h) | (g-mm/m²-h) |
| 5.6 | 99.3 | 2391 | 4.6 | 0.12 |
| 14.5 | 99.9 | 5891 | 56 | 1.42 |
| 19.1 | 99.9 | 4231 | 114 | 2.90 |

This membrane exhibits very high separation factors at all feed compositions evaluated, with the permeate in each instance comprising almost entirely water.

Example 4

An aqueous solution of the sodium salt of cellulose sulfate having a sulfate degree of substitution of 2.5 is prepared.

A 1.5-mil (38 µm) membrane is prepared in the manner described in Example 1. The membrane is evaluated for 96.25 hours at 25°C with results as reported in Table IV.

### TABLE IV

| Time (h) | % $H_2O$ in feed | % $H_2O$ in permeate | Separation factor | Permeation rate | |
|---|---|---|---|---|---|
| | | | | (g-mil/m²-h) | (g-mm/m²-h) |
| 0.75 | 20.20 | 98.68 | 295 | 440.9 | 11.20 |
| 6.79 | 19.79 | 99.64 | 1122 | 413.2 | 10.50 |
| 23.63 | 18.57 | 99.68 | 1366 | 372.8 | 9.47 |
| 96.25 | 14.57 | 99.85 | 3903 | 261.6 | 6.64 |

As can be seen from Table IV, excellent separations are obtained using the cellulose sulfate membrane.

Example 5

To demonstrate the effect of the counterion on selectivity and permeation rate, a membrane is prepared from 80 percent sodium carboxymethylcellulose having a degree of substitution of 0.9 and 20 percent sodium polyacrylate. This membrane is converted to the hydrogen form by soaking the membrane in a 0.4 M HCl solution in 90 percent ethanol and 10 percent water.

Conversion to acid form is confirmed from the IR spectrum. The membrane is then soaked in a fresh 90 percent ethanol, 10 percent water solution and evaluated for the separation of ethanol/water solution as described in Example 1. The feed composition initially contains 10.1 percent of water. After 52 hours of operation, the permeate contains 69.8 percent of water yielding a separation factor of 21. The permeation rate is 93 g-mil/m²-h (2.36 g-mm/m²-h).

The membrane is then converted to potassium form by soaking in a 0.5 M potassium hydroxide solution and 90 percent ethanol, 10 percent water for 3.75 hours. The membrane is then soaked in fresh 90 percent ethanol, 10 percent water solution for 16 hours and dried. The conversion to potassium form is confirmed by IR spectrum. The membrane is then evaluated using an ethanol/water feed containing 20 percent water. When the water content of the feed is reduced to 19.2 percent, the separation factor is 697. When the water content of the feed is reduced to 13.9 percent, the separation factor is 6188. At feed water content of 10.2 percent, the separation factor is 8795. In all cases, the permeate contains over 99 percent water. In addition to the greatly improved separation factor, the permeation rate increases when the membrane is converted to potassium form from about 93 g-mil/m²-h (2.36 g-mm/m²-h) to as much as 595 g-mil/m²-h (14.8 g-mm/m²-h).

Example 6

Membrane Nos. VIIA—VIIF, having thicknesses as noted in Table V, are prepared from a 4.25 percent solids aqueous solution containing 80 percent sodium-carboxymethylcellulose and 20 percent sodium polyacrylate, said percentages being based on the weight of the solids. The membrane is used to separate, at 25°C, mixtures containing 11 weight percent water and 89 weight percent of the organic compounds noted in Table V following. The permeate composition, selectivity factor α, and permeation rates for each separation are as reported in Table V following.

TABLE V

| Membrane No. | Thickness μm (mil) | Organic compound | % $H_2O$ in permeate | Separation factor | Permeation rate | |
|---|---|---|---|---|---|---|
| | | | | | (g-mil/m²-h) | (g-mm/m²-h) |
| VIIA | 30 (1.18) | ethanol | 99.7 | 2,700 | 50 | 1.27 |
| VIIB | 19.3 (0.76) | 2-propanol | >99.99[1] | 800,000 | 155 | 3.94 |
| VIIC | 32 (1.27) | t-butanol | >99.99[1] | 800,000 | 224 | 5.69 |
| VIID | 31 (1.21) | 1-propanol | 99.997 | 270,000 | 250 | 6.35 |
| VIIE | 21 (0.82) | 1-butanol | 98.8 | 730 | 412 | 10.46 |
| VIIF | 23 (0.90) | acetone | 99.853 | 5,500 | 424 | 10.77 |

[1] No detectable organic found in permeate.

# EP 0 146 655 B1

As can be seen from the foregoing table, the membranes of this invention can be used to perform very efficient separations of water from a variety of organic compounds.

## Claims

1. A process for separating mixtures of water and an organic compound comprising
   (a) contacting one side of a membrane with a fluid feed mixture containing water and an organic compound, and,
   (b) withdrawing from the other side of said membrane a permeate in vapor form, said permeate containing a higher concentrate of water than said feed mixture,
   characterized by using a water-selective permeation membrane comprising an essentially continuous anionic polysaccharide composition wherein said polysaccharide is selected from the group consisting of an alkali metal carboxyalkyl cellulose, an alkali metal cellulose sulfate, and ether derivatives thereof, wherein said anionic polysaccharide contains a plurality of pendant anionic groups in salt form and said anionic groups are present in an amount sufficient to allow the membrane to permeate water while substantially impeding permeation of organic compounds therethrough.

2. The process of claim 1 wherein said polysaccharide derivative is a cellulose derivative containing from 0.1 to 3.0 anionic groups per anhydroglucose unit of the cellulose molecule.

3. The process of claim 1 or claim 2 wherein the membrane further comprises a polymer which is not a polysaccharide which polymer has a plurality of anionic groups in salt form, said polymer being present in an amount sufficient to increase the charge density of said membrane.

4. The process of claim 3 wherein the polymer which is not a polysaccharide is a polymer of acrylic acid, vinylsulfonic acid or styrene sulfonic acid.

5. The process of claim 3 or claim 4 wherein the polymer which is not a polysaccharide comprises from 1 to 70 weight percent of said membrane.

6. The process of any of claims 1—5 wherein said alkali metal salt is a cesium or potassium salt.

7. The process of any of claims 1—6 wherein the membrane is crosslinked in an amount sufficient to render the membrane insoluble in water.

8. The process of any of claims 1—7 wherein the organic compound is an aliphatic alcohol.

9. A water-selective permeation membrane comprising an essentially continuous anionic polysaccharide composition, characterized in that said polysaccharide is selected from the group consisting of potassium carboxyalkyl cellulose, cesium carboxyalkyl cellulose, an alkali metal cellulose sulfate, and ether derivatives thereof, wherein said anionic polysaccharide contains a plurality of pendant anionic groups in salt form and said anionic groups are present in an amount sufficient to allow the membrane to permeate water while substantially impeding permeation of organic compounds therethrough.

10. The membrane of claim 9 wherein said polysaccharide derivative is a cellulose derivative containing from 0.1 to 3.0 anionic groups per anhydroglucose unit of the cellulose molecule.

11. The membrane of claim 9 or claim 10 further comprising a polymer which is not a polysaccharide which polymer has a plurality of anionic groups in salt form, said polymer being present in an amount sufficient to increase the charge density in said membrane.

12. The membrane of claim 11 wherein the polymer which is not a polysaccharide is a polymer of acrylic acid, vinylsulfonic acid or styrene sulfonic acid.

13. The membrane of claim 11 or claim 12 wherein the polymer which is not a polysaccharide comprises from 1 to 70 weight percent of said membrane.

14. The membrane of any of claims 9—13 wherein said alkali metal salt is a cesium or potassium salt.

15. The membrane of any of claims 9—14 which is crosslinked in an amount sufficient to render the membrane insoluble in water.

## Patentansprüche

1. Verfahren zum Trennen von Mischungen von Wasser und einer organischen Verbindung durch
   (a) in Berührungbringen einer Seite einer Membrane mit einer zugeführten, flüssigen, Wasser und eine organische Verbindung enthaltenden Mischung und
   (b) Abziehen eines dampfförmigen Permeats von der anderen Seite der Membrane, wobei das Permeat eine höhere Wasserkonzentration aufweist als die zugeführte Mischung,
   gekennzeichnet durch Verwenden einer wasserselektiven Permeationsmembrane, die im wesentlichen eine endlose, anionische Polysaccharidzusammensetzung enthält, wobei das Polysaccharid aus der aus Alkalicarboxyalkylcellulose, Alkalicellulosesulfat und Etherderivaten derselben bestehenden Gruppe ausgewählt ist und das anionische Polysaccharid eine Vielzahl von anhängenden anionischen Gruppen in Salzform enthält, die in einer solchen Menge anwesend sind, daß die Membrane Wasser durchläßt, während die Permeation organischer Verbindungen im wesentlichen behindert ist.

2. Verfahren nach Anspruch 1, dadurch gekennzeichnet, daß das Polysaccharidderivat ein Cellulosederivat ist, das von 0,1—3,0 anionische Gruppen pro Glucoseanhydrideinheit des Cellulosemoleküls enthält.

9

3. Verfahren nach Anspruch 1 oder 2, dadurch gekennzeichnet, daß die Membrane weiterhin ein Polymer enthält, das kein Polysaccharid ist und eine Vielzahl von anionischen Gruppen in Salzform aufweist, und das Polymer in einer ausreichenden Menge vorhanden ist, um die Ladungsdichte der Membrane zu erhöhen.

4. Verfahren nach Anspruch 3, dadurch gekennzeichnet, daß das Polymer, das kein Polysaccharid ist, ein Polymer von Acrylsäure, Vinylsulfonsäure oder Styrolsulfonsäure ist.

5. Verfahren nach Anspruch 3 oder 4, dadurch gekennzeichnet, daß das Polymer, das kein Polysaccharid ist, von 1—70 Gew.-% der Membrane ausmacht.

6. Verfahren nach jedem der Ansprüche 1—5, dadurch gekennzeichnet, daß das Alkalisalz ein Casium- oder Kaliumsalz ist.

7. Verfahren nach jedem der Ansprüche 1—6, dadurch gekennzeichnet, daß die Membrane in ausreichendem Maße vernetzt ist, um sie wasserunlöslich zu machen.

8. Verfahren nach jedem der Ansprüche 1—7, dadurch gekennzeichnet, daß die organische Verbindung ein aliphatischer Alkohol ist.

9. Wasserselektive Permeationsmembrane enthaltend eine im wesentlichen endlose, anionische Polysaccharidzusammensetzung, dadurch gekennzeichnet, daß das Polysaccharid aus der aus Kaliumcarboxyalkylcellulose, Cäsiumcarboxyalkylcellulose, Alkalicellulosesulfat und Etherderivaten derselben bestehenden Gruppe ausgewählt ist, wobei das anionische Polysaccharid eine Vielzahl von anhängenden anionischen Gruppe in Salzform enthält, die in einer solchen Menge anwesend sind, daß die Membrane Wasser durchläßt, während die Permeation organischer Verbindungen im wesentlichen behindert ist.

10. Membrane nach Anspruch 9, dadurch gekennzeichnet, daß das Polysaccharidderivat ein Cellulosederivat ist, das von 0,1—3,0 anionische Gruppen pro Glucoseanhydrideinheit des Cellulosemoleküls enthält.

11. Membrane nach Anspruch 9 oder 10, dadurch gekennzeichnet, daß sie weiterhin ein Polymer enthält, das kein Polysaccharid ist und eine Vielzahl von anionischen Gruppen in Salzform aufweist, und das Polymer in einer ausreichenden Menge vorhanden ist, um die Ladungsdichte der Membrane zu erhöhen.

12. Membrane nach Anspruch 11, dadurch gekennzeichnet, daß das Polymer, das kein Polysaccharid ist, ein Polymer von Acrylsäure, Vinylsulfonsäure oder Styrolsulfonsäure ist.

13. Membrane nach Anspruch 11 oder 12, dadurch gekennzeichnet, daß das Polymer, das kein Polysaccharid ist, von 1—70 Gew.-% der Membrane ausmacht.

14. Membrane nach jedem der Ansprüche 9—13, dadurch gekennzeichnet, daß das Alkalisalz ein Cäsium- oder Kaliumsalz ist.

15. Membrane nach jedem der Ansprüche 9—14, dadurch gekennzeichnet, daß die Membrane in ausreichendem Maß vernetzt ist, um sie wasserunlöslich zu machen.

**Revendications**

1. Procédé de séparation de mélanges d'eau et d'un composé organique, comprenant les étapes qui consistent:

(a) à mettre en contact un côté d'une membrane avec un mélange d'alimentation fluide contenant de l'eau et un composé organique, et

(b) à soutirer de l'autre côté de la membrane un perméat sous forme vapeur, ce perméat ayant une plus forte teneur en eau que le mélange d'alimentation,

caractérisé en ce que l'on utilise une membrane de perméation sélective vis-à-vis de l'eau, comprenant une composition essentiellement continue de polysaccharide anionique, le polysaccharide étant choisi dans le groupe constitué par une carboxyalkylcellulose de métal alcalin, un cellulose-sulfate de métal alcalin et des dérivés éthers de ceux-ci, le polysaccharide anionique contenant de multiples groupes anioniques pendants sous forme sel et les groupes anioniques étant présents en une quantité suffisante pour permettre à la membrane d'être traversée par l'eau tout en empêchant pratiquement la perméation des composés organiques.

2. Procédé selon la revendication 1, dans lequel le dérivé polysaccharide est un dérivé de cellulose contenant de 0,1 à 3,0 groupes anioniques par motif anhydroglucose de la molécule de cellulose.

3. Procédé selon la revendication 1 ou 2, dans lequel la membrane comprend en outre un polymère qui n'est pas un polysaccharide, ce polymère comportant de multiples groupes anioniques sous forme sel, ce polymère étant présent en une quantité suffisante pour augmenter la densité de charges de la membrane.

4. Procédé selon la revendication 3, dans lequel le polymère qui n'est pas un polysaccharide est un polymère d'acide acrylique, d'acide vinylsulfonique ou d'acide styrènesulfonique.

5. Procédé selon la revendication 3 ou 4, dans lequel le polymère qui n'est pas un polysaccharide constitue de 1 à 70% en poids de la membrane.

6. Procédé selon l'une quelconque des revendications 1—5, dans lequel le sel de métal alcalin est un sel de césium ou de potassium.

7. Procédé selon l'une quelconque des revendications 1—6, dans lequel la membrane est réticulée en une quantité suffisante pour rendre la membrane insoluble dans l'eau.

8. Procédé selon l'une quelconque des revendications 1—7, dans lequel le composé organique est un alcool aliphatique.

9. Membrane de perméation sélective vis-à-vis de l'eau, comprenant une composition essentiellement continue de polysaccharide anionique, caractérisée en ce que le polysaccharide est choisi dans le groupe constitué par une carboxyalkylcellulose de potassium, une carboxyalkylcellulose de césium, un cellulose-sulfate de métal alcalin et des dérivés éthers de ceux-ci, le polysaccharide anionique contenant de multiples groupes anioniques pendants sous forme sel et les groupes anioniques étant présents en une quantité suffisante pour permettre à la membrane de laisser passer l'eau tout en empêchant pratiquement la perméation des composés organiques.

10. Membrane selon la revendication 9, dans laquelle le dérivé polysaccharide est un dérivé de cellulose contenant de 0,1 à 3,0 groupes anioniques par motif anhydroglucose de la molécule de cellulose.

11. Membrane selon la revendication 9 ou 10, comprenant en outre un polymère qui n'est pas un polysaccharide, ce polymère comportant de multiples groupes anioniques sous forme sel, ce polymère étant présent en une quantité suffisante pour augmenter la densité de charges de la membrane.

12. Membrane selon la revendication 11, dans laquelle le polymère qui n'est pas un polysaccharide est un polymère d'acide acrylique, d'acide vinylsulfonique ou d'acide styrènesulfonique.

13. Membrane selon la revendication 11 ou 12, dans laquelle le polymère qui n'est pas un polysaccharide constitue de 1 à 70% en poids de la membrane.

14. Membrane selon l'une quelconque des revendications 9—13, dans laquelle le sel de métal alcalin est un sel de césium ou de potassium.

15. Membrane selon l'une quelconque des revendications 9—14, qui est réticulée en quantité suffisante pour rendre la membrane insoluble dans l'eau.